# EUROPÄISCHE PATENTANMELDUNG

(11) **EP 1 191 356 A2**
(43) Veröffentlichungstag der Anmeldung: **27.03.2002**
(21) Anmeldenummer: 01122158.7
(22) Anmeldetag: 15.09.2001
(51) Int. Cl.: G02B 1/10, G02B 5/00

(54) **Optisches Element und Verfahren zur Wiedergewinnung des Substrates**

(30) Priorität: 20.09.2000 RU 2000124129
(71) Anmelder: Carl Zeiss Stiftung, 89518 Heidenheim (DE)
(72) Erfinder: Salashchenko, Nikolay, Prof. Dr., 603136 Nizhny Novgorod (RU)
(74) Vertreter: Fuchs Mehler Weiss & Fritzsche

(57) **Zusammenfassung**

Bei der Herstellung von optischen Elementen werden nicht nur ebene Substrate, sondern auch sphärische oder asphärische Substrate verwendet. Dabei können die Kosten des Substrates die Beschichtungskosten um ein Mehrfaches übertreffen. Insbesondere bei Entwicklungsarbeiten werden Kosten eingespart, falls ein Substrat mehrmals verwendet werden kann. Zur Wiedergewinnung eines Substrates wird vorgeschlagen, zwischen dem Substrat und den funktionellen Schichten eine Zwischenschicht aus mindestens einer Lage Chrom und einer Lage Scandium vorzusehen. Durch Eintauchen des optischen Elementes in eine Salzsäurelösung löst sich diese Zwischenschicht auf, so daß auch die funktionelle Schicht vom Substrat abgelöst wird und das Substrat zu einer Wiederbenutzung bereitsteht.

## Beschreibung

Die Erfindung betrifft ein optisches Element aus einem Substrat, einer Zwischenschicht und mindestens einer funktionellen Schicht, das für die Wiedergewinnung des Substrates geeignet ist. Außerdem bezieht sich die Erfindung auf ein Verfahren zur Wiedergewinnung eines Substrates eines optisches Elements aus Substrat, Zwischenschicht und mindestens einer funktionellen Schicht.

Bei der Herstellung von optisches Elementen werden nicht nur ebene Substrate, sondern auch sphärische oder asphärische Substrate verwendet. In diesen Fällen können die Kosten des Substrates die Beschichtungskosten um ein Mehrfaches übertreffen. Daher ist es bei Entwicklungsarbeiten sinnvoll, wenn ein Substrat mehrmals verwendet werden kann. Auch in der Produktion kann es von Vorteil sein, wenn Beschichtungen, die nicht den Anforderungen entsprechen, wieder abgelöst werden können und das Substrat wiederverwendet werden kann. Dabei kommt es vor allem darauf an, daß die ursprüngliche Form des Substrates nicht verändert wird und daß die Rauhigkeit der Substratoberfläche nicht erhöht wird. Fehlerhafte optisches Elemente können beispielsweise zu geringe Reflektivitäten aufweisen oder zu Abbildungsfehlern führen.

Die optischen Elemente können eine oder mehr funktionelle Schichten aufweisen, die ihrerseits aus einer oder mehreren Lagen bestehen. Als Beispiel sei ein Spiegel für weiche Röntgenstrahlung genannt, der auf einem Siliziumsubstrat eine Schicht aus Molybdän- und Siliziumlagen für die Reflexion der weichen Röntgenstrahlung sowie darauf eine einlagige Schutzschicht aufweist.

Die Anforderungen an Substrate, auch nach der Wiedergewinnung, werden in D.P. Gaines, et al., SPIE vol. 1547 (1991) 228 - 238 diskutiert. Dort werden auch zwei Methoden zum Reparieren von optischen Elementen vorgestellt. Zum einen können auf die fehlerhaften Lagen weitere, korrekte Lagen aufgebracht werden. Andererseits kann eine Zwischenschicht zwischen Substrat und funktionellen Schichten weggeätzt werden und damit die Beschichtung gelöst werden. Beide Methoden weisen Nachteile auf. Bei der ersten Methode können sich Fehler in der Oberflächenbeschaffenheit und der Form des optisches Elements über die einzelnen Lagen hinweg fortpflanzen. Außerdem können sich durch Spannungen Risse bilden und die Beschichtung teilweise ablösen. Die zweite Methode hat den Nachteil, daß das Ablösen bei größeren Flächen sehr lange dauert.

Eine gute Zwischenschicht muß homogen sein und eine möglichst geringe Oberflächenrauhigkeit aufweisen. Außerdem muß sie sich durch Substanzen ätzen lassen, die das Substrat nicht angreifen. Aus diesem Grund wird im o.g. Artikel Aluminium als Zwischenschicht auf einem Substrat auf Siliziumbasis vorgeschlagen. Geätzt wird die Zwischenschicht aus Aluminium in einer Lösung aus Salzsäure und Kupfersulfat. Allerdings weisen optische Elemente mit einer Zwischenschicht aus Aluminium eine geringere Reflektivität auf als optische Elemente ohne diese Zwischenschicht.

Wie schon erwähnt, ist das Ablösen von funktionellen Schichten eines optischen Elements durch Ätzen einer Zwischenschicht sehr zeitintensiv. Denn um die Zwischenschicht wegätzen zu können, muß die Lösung erst durch die funktionelle(n) Schicht(en) dringen. Je nach verwendeten Substanzen kann die mindestens eine funktionelle Schicht auch das Ätzen der Zwischenschicht ganz verhindern.

Eine weitere Möglichkeit, die Beschichtung von einem Substrat zu entfernen, besteht im Trockenätzen. Derartige Verfahren sind beispielsweise in der WO 97/31132 und in der EP 0 422 381 A2 beschrieben. Bei optischen Elementen ist es aber bisher noch nicht gelungen, die Trockenätzprozesse derart zu optimieren, daß zwar die funktionellen Schichten entfernt werden, das Substrat aber nicht angegriffen wird.

Bei anderen Gegenständen als optischen Elementen sind ebenfalls Versuche des chemischen Entfernens unternommen worden.

In der DE 31 10 931 wird ein Verfahren zum Entfernen von einer auf einer Cadmiumsulfidschicht aufgebrachten, fehlerhaften Kupfersulfidschicht, insbesondere beim Herstellungsprozeß von Solarzellen beschrieben. Das die beiden Schichten tragende Substrat wird in eine Cyanidionen enthaltende wässrige Lösung eingetaucht, bis unter Bildung von Kupfertetracyanidionen die fehlerhafte Kupfersulfidschicht völlig aufgelöst wird. Die Cadmiumsulfidschicht wird dadurch nicht gelöst.

Die DE 37 37 483 A1 beschreibt ein Verfahren zur Wiederverwendung von Glassubstraten für optisch auslesbare Dichtspeichermaster. Die plattenförmigen Glassubstrate werden mit einer Photoresistschicht beschichtet, welche teilweise belichtet und entwickelt wird. Danach werden sie mit einer elektrisch leitfähigen Metallschicht und mit einer galvanisch aufgebrachten Verstärkung versehen, wobei die letzten beiden Metallschichten anschließend abgelöst werden und direkt oder nach weiteren Vervielfältigungsschritten der Herstellung optisch auslesbarer plattenförmiger Informationsträger dienen.

Dabei ist vorgesehen, daß nach Ablösen der Photoresistschicht an der Glasplatte haftende Reste der elektrisch leitfähigen Metallschicht und der galvanisch aufgebrachten Verstärkung mittels Spülen mit einem Gemisch aus einer die Metalle angreifenden Säure und Wasser entfernt werden.

Ein ähnlicher Ansatz wird in der DE 43 18 178 C2 gewählt, in der es um ein Verfahren zur chemischen Entfernung von mit der Oberfläche eines Substrates aus Glas, Glaskeramik oder Keramik verbundenen Beschichtung geht. Dabei werden die dekorierten Gläser mit Salzsäure und/oder Natronlauge oder mit Schwefelsäure und Kaliumhydroxid in Kontakt gebracht.

In der US 5 265 143 wird ein optisches Element aus einem Substrat, einer Zwischenschicht und einer Viellagenschicht beschrieben, bei der in einer Ätzlösung bei einer Temperatur von 130°C die Zwischenschicht sich 1000 Mal schneller als das Substratmaterial löst. Insbesondere ist diese Zwischenschicht aus Germanium. Die Viellagenschicht besteht in der Regel aus Molybdän und Silizium. Als Ätzlösung wird eine wässrige Lösung aus 0,88 Mol Kaliumhexacyanoferrat und 1 Mol Kaliumhydroxid verwendet. Bei Raumtemperatur wird dadurch nur Molybdän gelöst, erhitzt man die Lösung auf über 60°C, wird auch das Silizium gelöst. Neu beschichtete, wieder verwendete Substrate zeigten allerdings teilweise Reflektivitäten, die nur 80% der Reflektivität der ursprünglichen optischen Elemente betrugen. Dies wurde auf erhöhte Oberflächenrauhigkeit zurückgeführt. Um dem entgegenzutreten, wurde zwischen der Zwischenschicht und dem Substrat eine Grenzschicht aus chemisch inertem Material, wie z.B. Ruthenium aufgebracht. Bei der Herstellung von Iridium auf Glaskeramikspiegeln wird angeregt, als Zwischenschicht Chrom einzusetzen. Dies sollte aber nur in Verbindung mit einer Grenzschicht geschehen, da ansonsten die Oberflächenrauhigkeit zu sehr zunimmt.

Vor diesem Hintergrund ist es Aufgabe der Erfindung, ein optisches Element, dessen Substrat unter Beibehaltung bestmöglicher Oberflächenqualität wiederverwendet werden kann, bzw. ein Verfahren zur Wiedergewinnung des Substrates zu finden.

Gelöst wird diese Aufgabe durch ein optisches Element aus einem Substrat, einer Zwischenschicht und mindestens einer funktionellen Schicht, das für die Wiedergewinnung des Substrats geeignet ist und sich dadurch auszeichnet, daß die Zwischenschicht aus mindestens einer Lage Chrom und einer Lage Scandium besteht.

Außerdem wird die Aufgabe durch ein Verfahren zum Wiedergewinnen eines Substrates eines optisches Elements aus einem Substrat, einer Zwischenschicht auf der Basis von Chrom und Scandium und mindestens einer fünktionellen Schicht gelöst, bei dem das optisches Element in eine 15 - 30%ige wässrige Salzsäurelösung getaucht wird.

Taucht man ein optisches Element mit einer Zwischenschicht aus mindestens einer Lage Chrom und einer Lage Scandium in ein Bad aus 15 - 30%iger Salzsäure, löst sich die Zwischenschicht unter starker Gasbildung auf. Die Stücke der Zwischenschicht und insbesondere der mindestens einen funktionellen Schicht, die nicht von der Salzsäure aufgelöst werden, werden durch die Gasentwicklung quasi von dem Substrat abgesprengt. Dadurch wird erreicht, daß sowohl die Zwischenschicht als auch die mindestens eine funktionelle Schicht so gut wie vollständig vom Substrat abgelöst werden. Dies ist umso erstaunlicher, als daß Chrom dafür bekannt ist, daß bei Kontakt mit Salzsäure eine Passivierung stattfindet, so daß es sich nicht in Salzsäure auflöst.

Die erste Lage auf dem Substrat kann sowohl Chrom als auch Scandium sein. Auch die letzte Lage vor der funktionellen Schicht kann sowohl Scandium als auch Chrom sein.

Der Vorteil des erfindungsgemäßen Verfahrens besteht darin, daß das Substrat aus Silizium, Glas oder Quarz nicht angegriffen wird und daher sowohl seine Form als auch seine ursprüngliche Oberflächenrauhigkeit beibehält. Dies führt dazu, daß auch bei Wiederbenutzung optische Elemente mit hohen Reflektivitäten hergestellt werden können. Es hat sich als vorteilhaft herausgestellt, wenn die Zwischenschicht aus jeweils ca. 15-25 Lagen Chrom und Scandium besteht. Vorzugsweise haben dabei eine Lage Scandium und eine Läge Chrom gemeinsam eine Dicke von 2-3 nm. Bei diesen geringen Dicken kann kein Kristallwachstum stattfinden, das sonst zu einer erhöhten Oberflächenrauhigkeit führen würde. Besonders bevorzugt sind gleiche Lagendicken für Chrom und Scandium. Derartige Zwischenschichten haben den Effekt, daß einerseits die Gasentwicklung beim Ätzen der Zwischenschicht hinreichend ist, um auch dickere funktionelle Schichten abzusprengen. Andererseits haben sie den Effekt, daß das Substrat besser gegen etwaige Reaktionen mit der Salzsäure geschützt wird.

Bei der Durchführung des erfindungsgemäßen Verfahren hat es sich als vorteilhaft herausgestellt, wenn das Salzsäurebad eine Temperatur höher als 70°C, vorzugsweise 78 - 82°C aufweist. Dies erhöht die Reaktionsgeschwindigkeit und erlaubt es, das optische Element weniger als 25 min im Salzsäurebad zu behalten und dennoch die Zwischenschicht und die funktionelle(n) Schicht(en) abzulösen.

Bei großflächigen optischen Elementen mit dicken funktionellen Schichten wird vorzugsweise das optische Element zusätzlich mit einer Mischung aus zu gleichen Teilen 35 - 40%iger wässriger Kaliumhydroxidlösung und 15-25%iger wässriger Kaliumhexacyanoferratlösung gesäubert. Dazu wird beispielsweise ein Lappen oder ein Wattebausch oder ein anderer Putzgegenstand mit dieser Mischung imprägniert und damit das optische Element bzw. das nunmehr übrig gebliebene Substrat abgewischt, um es von etwaigen Resten der Zwischenschicht und der mindestens einen funktionellen Schicht zu säubern.

Die Erfindung soll anhand der folgenden Beispiele weiter erläutert werden.

### Beispiel 1

Ein Siliziumsubstrat einer Fläche von 3,14 cm² mit einer Zwischenschicht aus 15 3 nm dicken Chrom- und Scandiumlagenpaaren und einer funktionellen Schicht aus Molybdän- und Siliziumlagen einer Schichtdicke von 350 nm weist eine Reflektivität von 68% bei einer Wellenlänge von 13,4 nm auf. Um die funktionelle Schicht und die Zwischenschicht von dem Substrat abzulösen, wird das Viellagensystem 15 min lang in eine 75°C warme 25%ige Salzsäurelösung in Wasser getaucht. Danach wird das wiedergewonnene Siliziumsubstrat erneut mit einer Zwischenschicht aus 15 Chrom- und Scandiumlagenpaaren mit einer Dicke von 3 nm beschichtet und mit einer funktionellen Schicht einer Dicke von 350 nm auf der Basis von Molybdän und Silizium. Es wird bei einer Wellenlänge von 13,4 nm wieder eine Reflektivität von 68% erreicht.

### Beispiel 2

Ein Siliziumsubstrat einer Fläche von 12,5 cm² mit einer Zwischenschicht aus 25 2,5 nm dicken Chrom- und Scandiumlagenpaaren und einer funktionellen Schicht aus je 100 Wolfram- und Siliziumlagen einer Periodendicke von 3 nm weist eine Reflektivität von 35% bei einer Wellenlänge von 0,99 nm auf. Um die funktionelle Schicht und die Zwischenschicht von dem Substrat abzulösen, wird das Viellagensystem 20 min lang in eine 80°C warme 30%ige Salzsäurelösung in Wasser getaucht. Danach wird das wiedergewonnene Siliziumsubstrat erneut mit einer Zwischenschicht aus 25 Chrom- und Scandiumlagenpaaren mit einer Dicke von 2,5 nm beschichtet und mit einer funktionellen Schicht einer Dicke von 300 nm auf der Basis von Wolfram und Silizium. Es wird bei einer Wellenlänge von 0,99 nm wieder eine Reflektivität von 35% erreicht.

### Beispiel 3

Ein Siliziumsubstrat einer Fläche von 6,25 cm² mit einer Zwischenschicht aus 30 2 nm dicken Chrom- und Scandiumlagenpaaren und einer funktionellen Schicht einer Dicke von 225 nm aus Nickel- und Kohlenstofflagen weist eine Reflektivität von 29% bei einer Wellenlänge von 4,47 nm auf. Um die funktionelle Schicht und die Zwischenschicht von dem Substrat abzulösen, wird das Viellagensystem 18 min lang in eine 70°C warme 20%ige Salzsäurelösung in Wasser getaucht. Im Anschluß daran wird das Siliziumsubstrat durch Abwischen mit einem in eine Lösung aus 2 gleichen Teilen 40%iger wässriger Kaliumhydroxidlösung und 20%iger wässriger Kaliumhexacyanoferratlösung getauchten Wattebausch gesäubert. Danach wird das wiedergewonnene Siliziumsubstrat erneut mit einer Zwischenschicht aus 30 Chrom- und Scandiumlagenpaaren mit einer Dicke von 2 nm beschichtet und mit einer funktionellen Schicht einer Dicke von 225 nm auf der Basis von Nickel und Kohlenstoff. Es wird bei einer Wellenlänge von 4,47 nm wieder eine Reflektivität von 29% erreicht.

### Beispiel 4

Ein Quarzsubstrat einer Fläche von 6,25 cm² mit einer Zwischenschicht aus 30 2 nm dicken Chrom- und Scandiumlagenpaaren und einer funktionellen Schicht aus Molybdän- und Borcarbidlagen einer Dicke von 240 nm weist eine Reflektivität von 30% bei einer Wellenlänge von 6,76 nm auf. Um die funktionelle Schicht und die Zwischenschicht von dem Substrat abzulösen, wird das Viellagensystem 20 min lang in eine 80°C warme 23%ige Salzsäurelösung in Wasser getaucht. Im Anschluß daran wird das Quarzsubstrat mit einer Lösung aus zu gleichen Teilen 35%iger wässriger Kaliumhydroxidlösung und 25%iger wässriger Kaliumhexacyanoferratlösung mittels eines Lappens gesäubert. Danach wird das wiedergewonnene Quarzsubstrat erneut mit einer Zwischenschicht aus 30 Chrom- und Scandiumlagenpaaren mit einer Dicke von 2 nm beschichtet und mit einer funktionellen Schicht einer Dicke von 240 nm auf der Basis von Molybdän und Borcarbid. Es wird bei einer Wellenlänge von 6,76 nm wieder eine Reflektivität von 30% erreicht.

### Beispiel 5

Ein Glassubstrat einer Fläche von 12,5 cm² mit einer Zwischenschicht aus 25 3 nm dicken Chrom- und Scandiumlagenpaaren und einer funktionellen Schicht aus Molybdän- und Siliziumlagen einer Dicke von 272 nm weist eine Reflektivität von 66% bei einer Wellenlänge von 13,4 nm auf. Um die funktionelle Schicht und die Zwischenschicht von dem Substrat abzulösen, wird das Viellagensystem 15 min lang in eine 85°C warme 15%ige Salzsäurelösung in Wasser getaucht. Im Anschluß daran wird das Glassubstrat mit einer Lösung aus zu gleichen Teilen 45%iger wässriger Kaliumhydroxidlösung und 15%iger wässriger Kaliumhexacyanoferratlösung gesäubert. Danach wird das wiedergewonnene Glassubstrat erneut mit einer Zwischenschicht aus 25 Chrom- und Scandiumlagenpaaren mit einer Dicke von 3 nm beschichtet und mit einer funktionellen Schicht einer Dicke von 272 nm auf der Basis von Molybdän und Silizium. Es wird bei einer Wellenlänge von 13,4 nm wieder eine Reflektivität von 66% erreicht.

## Patentansprüche

1. Optisches Element aus einem Substrat, einer Zwischenschicht und mindestens einer funktionellen Schicht, **dadurch gekennzeichnet, daß** die Zwischenschicht aus mindestens einer Lage Chrom und einer Lage Scandium besteht.

2. Optisches Element nach Anspruch 1, **dadurch gekennzeichnet, daß** die Zwischenschicht aus jeweils ca. 15 - 25 Lagen Chrom und Scandium besteht.

3. Optisches Element nach Anspruch 1 oder 2, **dadurch gekennzeichnet, daß** in der Zwischenschicht eine Periode aus einer Lage Scandium und einer Lage Chrom eine Dicke von 2 - 3 nm aufweist.

4. Verfahren zur Wiedergewinnung eines Substrats eines optischen Elements aus einem Substrat, einer Zwischenschicht auf der Basis von Chrom und Scandium und mindestens einer funktionellen Schicht, bei dem das optische Element in eine 15 - 30% ige wässrige Salzsäure getaucht wird.

5. Verfahren nach Anspruch 4, **dadurch gekennzeichnet, daß** die Salzsäurelösung eine Temperatur > 70°C aufweist.

6. Verfahren nach Anspruch 4 oder 5, **dadurch gekennzeichnet, daß** das optische Element höchstens 25 min in der Salzsäurelösung bleibt.

7. Verfahren nach einem der Ansprüche 4 bis 6, **dadurch gekennzeichnet, daß** das optische Element nach der Behandlung im Salzsäurebad mit einer Mischung aus zu gleichen Teilen 35 - 45%iger wässriger Kaliumhydroxidlösung und 15 - 25%iger wässriger Kaliumhexacyanoferratlösung gesäubert wird.

8. Verfahren nach Anspruch 7, **dadurch gekennzeichnet, daß** das Substrat durch Abwischen mit einem mit der Kaliumhydroxid/Kaliumhexacyanoferrat/Wasser-Mischung getränkten Putzgegenstand, insbesondere einem Lappen oder einem Wattebausch, abgewischt wird.
